Europäisches Patentamt

European Patent Office

Office européen des brevets

(19)

(11) Numéro de publication: **0 211 753**
**A1**

(12)

# DEMANDE DE BREVET EUROPEEN

(21) Numéro de dépôt: 86401695.1

(22) Date de dépôt: 29.07.86

(51) Int. Cl.⁴: **G 05 D 13/62**

(30) Priorité: 30.07.85 FR 8511977

(43) Date de publication de la demande:
25.02.87 Bulletin 87/9

(84) Etats contractants désignés:
AT BE CH DE FR GB IT LI LU NL SE

(71) Demandeur: **Ernst, Marc**
**63 avenue de Flandre**
**F-59170 Croix(FR)**

(72) Inventeur: **Ernst, Marc**
**63 avenue de Flandre**
**F-59170 Croix(FR)**

(74) Mandataire: **Phélip, Bruno et al,**
**c/o Cabinet Harlé & Phélip 21, rue de la Rochefoucauld**
**F-75009 Paris(FR)**

(54) **Dispositif de commande d'un moteur réversible et à vitesse variable au moyen d'un moteur pas à pas.**

(57) L'invention a pour objet un dispositif de commande d'un moteur réversible et à vitesse variable à l'aide d'un système optoélectronique commandé par un moteur pas à pas caractérisé en ce qu'il comprend deux disques (1,2), le premier disque (1) étant solidaire du moteur, ou de l'ensemble mécanique à commander, et divisé en zones transparentes à la lumière, chacune de ces zones correspondant à une fonction du système à entraîner (arrêt- démarrage - accélération - hyperaccélération - STOP - urgence), le second disque (2) comprenant des zones lumineuses ou laissant passer la lumière, qui font face aux zones du premier disque (1), et étant entraîné par le moteur pas à pas, des cellules photoélectriques disposées en couronne recevant la lumière (de leur propre zone) se trouvant en arrière du disque (1); une source de lumière se trouvant en avant du disque (2) et faisant face à chaque zone (il y a donc autant de couronnes que de zones).

FIG.1

1

La présente invention concerne la commande d'un moteur électrique quelconque, réversible et à vitesse variable, par l'intermédiaire d'un système opto-électronique commandé par un moteur pas à pas.

Il est habituel de commander des moteurs à courant continu par des systèmes utilisant soit un capteur de vitesse, soit un système incrémental. Lors de la commande, il est mis en service une comparaison de la vitesse et du nombre de tours du moteurs à courant continu avec le programme initialement prévu. Ce système fait référence à une horloge et travaille soit en calcul analogique, soit en calcul digital, en boucle fermée (feed-back).

La présente invention a donc pour objet un dispositif de commande d'un moteur réversible et à vitesse variable à l'aide d'un système opto-électronique commandé par un moteur pas à pas caractérisé en ce qu'il comprend deux disques, le premier disque étant solidaire du moteur, ou de l'ensemble mécanique à commander, et divisé en zones transparentes à la lumière, chacune de ces zones correspondant à une fonction du système à entraîner (arrêt- démarrage - accélération - hyperaccélération - STOP - urgence), le second disque comprenant des zones lumineuses ou laissant passer la lumière, qui font face aux zones du premier disque et étant entraîné par le moteur pas à pas, des cellules photoélectriques disposées en couronne recevant la lumière (de leur propre zone) se trouvant en arrière du disque, une source de lumière se trouvant en avant du disque et faisant face à chaque zone (il y a donc autant de couronnes que de zones).

Selon une caractéristique particulière de l'inention les zones sont de transmission proportionnelle soit par un dégradé, soit par une largeur variable.

Dans le procédé qui fait l'objet de la présente invention, on commande les moteurs d'une manière digitale en boucle ouverte.

D'autres caractéristiques et avantages de l'in-

vention apparaîtront à la lecture de la description suivante d'une forme de réalisation non limitative de l'invention, en référence au dessin annexé dans lequel:

Fig. 1 représente une vue en plan du disque entraîné par le moteur de puissance.

Fig. 2 représente en plan le disque entraîné par le moteur pas à pas.

Fig. 3 représente en coupe le dispositif de l'invention.

Fig. 4 représente des cellules photo-électriques captrices de la lumière transmise à travers les zones spécifiques, et

Fig. 5 représente une variante de disque entraîné par le moteur de puissance.

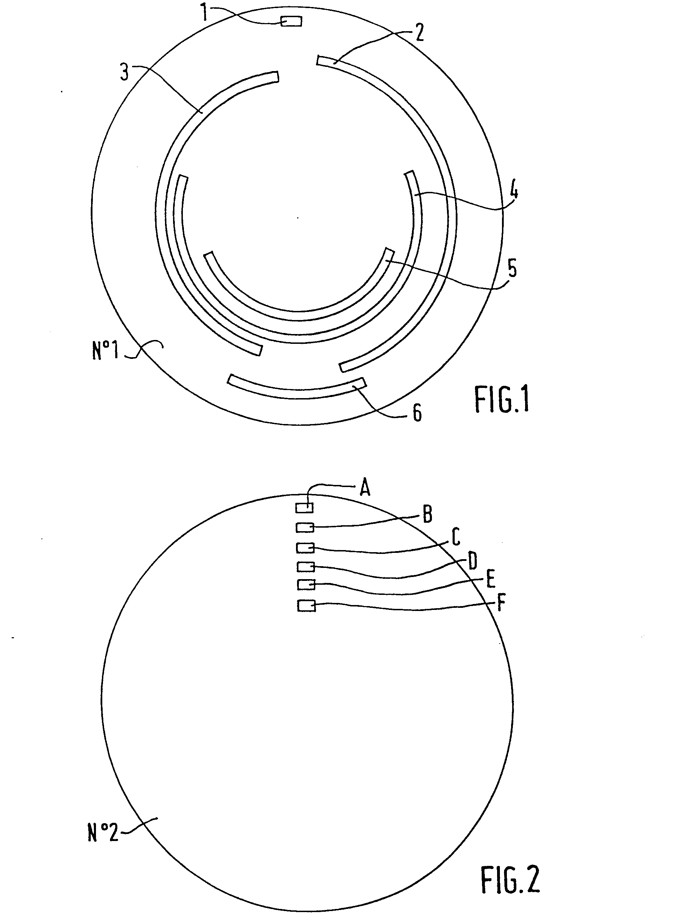

Le moteur réversible et à vitesse variable, (ou l'arbre entraîné par le moteur, après, par exemple, un réducteur), entraîne un disque (N° 1 - figure 1) laissant passer par endroits, des ondes lumineuses (ou infrarouges).

Les zones de transmission de lumière sont les suivantes:

Zone 1    zone d'arrêt : actionnant par exemple un frein magnétique ou un débrayage de l'ensemble à actionner et coupant le courant faisant fonctionner le moteur.

Zone 2    zone de démarrage du moteur dans le sens des aiguilles d'une montre.

Zone 3    zone de démarrage du moteur dans le sens inverse des aiguilles d'une montre.

Zone 4    zone d'accélération du moteur en relation avec la précédente de démarrage.

Zone 5    hyperaccélération : dans le même sens que la zone précédente.

Zone 6    zone d'arrêt d'urgence. STOP.

Le moteur ne doit jamais passer dans cette zone qui coupe toutes les alimentations, ne laissant

0211753

3

que les sécurités.

Les zones 2, 3, 4, 5 commandent le moteur en agissant soit sur la tension, soit sur la fréquence, soit sur le glissement d'un embrayage magnétique, hydraulique ou mécanique afin de faire varier la vitesse du moteur.

Face au disque de la figure 1 se trouve un disque (N° 2 - figure 2) qui comprend 6 zones (A à F) faisant face à chaque zone du disque précédent. Chacune de ces zones émet (ou transmet) un flux lumineux qui est intercepté par le disque N° 1. Le disque N° 2 est entraîné par un moteur pas à pas. La commande de ce moteur pas à pas est établie soit par un ordinateur, soit par un automate programmable ou tout autre moyen connu.

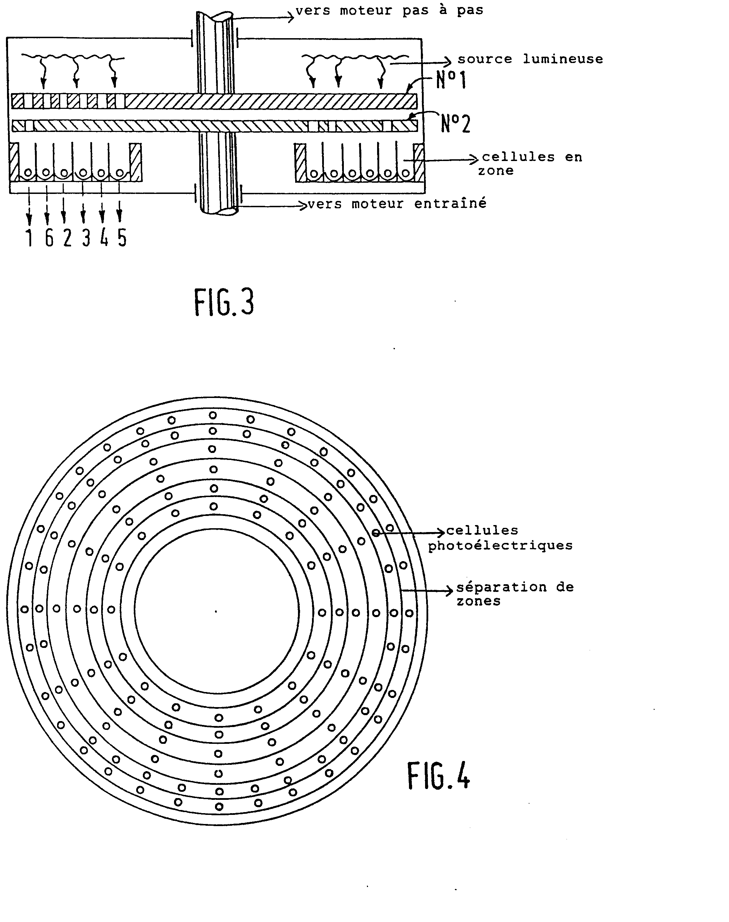

Quand les deux disques se font face et que le disque N° 2 est arrêté face au disque N° 1, la position des zones éclairantes se trouve face à la zone 1, correspondant à la position d'arrêt du moteur (Figure N° 3). Derrière le disque 2 se trouve la source de lumière, et derrière le disque 1 se trouvent les cellules photoélectriques situées en couronne (Figure 4) percevant le flux lumineux transmis, 6 couronnes correspondent aux zones 1 à 6.

Lorsque le moteur pas à pas fait déplacer le disque N° 2 dans le sens des aiguilles d'une montre, la zone A n'éclaire plus la zone 1 du disque 2, mais la zone B se met à éclairer la zone 2 qui fait fonctionner le moteur en démarrage dans le sens des aiguilles d'une montre. En continuant à tourner, la zone 2 continue à être éclairée et la zone 4 reçoit à son tour la lumière ce qui déclenche l'accélération. Ensuite la zone 5 est éclairée entraînant une hyperaccélération dans le sens des aiguilles d'une montre, et enfin, la zone 6 qui met l'ensemble en état d'arrêt d'urgence bloquant le moteur pas à pas et le moteur de puissance.

De même, quand le moteur pas à pas actionne le disque 2 dans le sens inverse des aiguilles d'une montre,

4

la zone 3 est éclairée ce qui entraîne le moteur à tourner dans le sens inverse. La zone 4 est ensuite éclairée déclenchant l'accélération, puis la zone 5, puis la zone 6.

Les zones 4 et 5 déclenchent l'accélération et l'hyperaccélération dans le même sens que les zones 2 ou 3. Il est évident que lorsque le moteur pas à pas tourne, ceci oblige le moteur commandé à suivre exactement le nombre de tours du moteur pas à pas. Ce système a pour avantage d'utiliser le fonctionnement du moteur pas à pas sans contrainte (le disque à entraîner étant de très faible masse) donc ne pouvant "sauter un pas". Il est évident que chaque zone de 2 à 5 devra être préréglée en fonction de la charge du moteur et de son alimentation (courant continu, alternatif, triphasé, etc...).

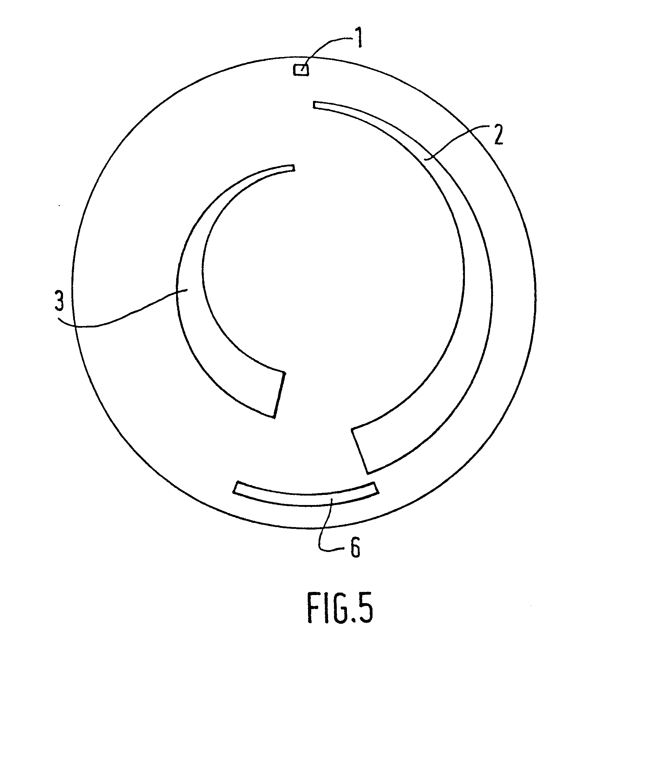

Une autre manière d'opérer consiste à n'utiliser que les zones 1 et 2, 3, 6 - 1 et 6, recevant la lumière en tout ou rien, tandis que les zones 2 et 3 perçoivent la lumière provenant des zones B et C du disque 2 d'une façon proportionnelle : soit par un dégradé, soit par une largeur variable (figure 5). L'accélération du moteur est proportionnelle à la lumière reçue grâce à un convertisseur analogique, de l'intensité lumineuse perçue, en commande de puissance de moteur.

Afin de préserver la position zéro du moteur pas à pas à l'arrêt (la zone A devant se trouver en face de la zone 1), il est prévu un frein mécanisme qui se déclenche automatiquement lors de l'arrêt de l'installation, c'est-à-dire lorsque le moteur pas à pas n'est plus alimenté.

Le disque habituellement commandé par le moteur pas à pas peut être entraîné soit à la main soit par des moyens moteurs quelconques.

REVENDICATIONS

1. Dispositif de commande d'un moteur réversible et à vitesse variable à l'aide d'un système optoélectronique commandé par un moteur pas à pas caractérisé en ce qu'il comprend deux disques (1,2), le premier disque (1) étant solidaire du moteur, ou de l'ensemble mécanique à commander, et divisé en zones transparentes à la lumière, chacune de ces zones correspondant à une fonction du système à entraîner (arrêt- démarrage - accélération - hyperaccélération - STOP - urgence), le second disque (2) comprenant des zones lumineuses ou laissant passer la lumière, qui font face aux zones du premier disque (1), et étant entraîné par le moteur pas à pas, des cellules photoélectriques disposées en couronne recevant la lumière (de leur propre zone) se trouvant en arrière du disque (1), une source de lumière se trouvant en avant du disque (2) et faisant face à chaque zone (il y a donc autant de couronnes que de zones).

2. Dispositif de commande selon la revendication 1, caractérisé en ce que les zones sont de transmission proportionnelle soit par un degradé, soit par une largeur variable.

3. Dispositif de commande selon la revendication 1 ou 2, caractérisé en ce que le disque habituellement commandé par le moteur pas à pas peut être entraîné soit à la main soit par des moyens moteurs quelconques.

0211753

FIG.1

FIG.2

2/3

vers moteur pas à pas

source lumineuse

N°1

N°2

cellules en zone

vers moteur entraîné

1 6 2 3 4 5

FIG.3

cellules photoélectriques

séparation de zones

FIG.4

FIG.5

Office européen
des brevets

**RAPPORT DE RECHERCHE EUROPEENNE**

EP  86 40 1695

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 414 217  (H.R. KILLIAN) <br> * Figures 1,8; revendications * | 1 | G 05 D  13/62 |
| A | DE-A-2 103 792  (S.F.M.I.) <br> * Figures  4-8;  revendications 1,10 * | 1 | |
| A | FR-A-1 434 063  (IBM) | | |
| A | GB-A-1 166 512  (THE TORRINGTON MANUFACTURING CO.) <br> * Figures 3,4 * | 2 | |

-----

| | |
|---|---|
| | DOMAINES TECHNIQUES RECHERCHES (Int. Cl.4) |
| | G 05 D <br> G 05 B |

Le present rapport de recherche a ete etabli pour toutes les revendications

| Lieu de la recherche | Date d'achevement de la recherche | Examinateur |
|---|---|---|
| LA HAYE | 29-10-1986 | BEYER F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant